# EUROPÄISCHE PATENTANMELDUNG

(11) **EP 1 146 485 A2**
(43) Veröffentlichungstag der Anmeldung: **17.10.2001**
(21) Anmeldenummer: 01106883.0
(22) Anmeldetag: 20.03.2001
(51) Int. Cl.: G07C 5/00

(54) **Informations- und/oder Servicesystem**

(30) Priorität: 13.04.2000 DE 10018437
(71) Anmelder: Voith Turbo GmbH, 89522 Heidenheim (DE)
(72) Erfinder: Müller, Robert, Dr., 89407 Dillingen (DE); Hendrickx, Hub, 7391 MT Rwello (NL); Nijhof, Tonnie, 7321 LE Apeldoorn (NL)
(74) Vertreter: Koch, Annegret Christa

(57) **Zusammenfassung**

Die Erfindung betrifft ein Informations- und/oder Servicesystem für Antriebskomponenten, insbesondere für den Einsatz in Fahrzeugen mit einer ersten, der Antriebs- oder Funktionskomponente zugeordneten Teilinformationseinrichtung zur Erfassung der den Funktionszustand und/oder die Betriebsweise wenigstens mittelbar charakterisierenden Größen und einer zweiten Teilinformationseinrichtung zur wenigstens teilweisen Erfassung der die Fahrstrecke wenigstens mittelbar charakterisierenden Größen. Beide Teilinformationseinrichtungen sind mit einer zentralen Datenbereitstellungseinrichtung, umfassend mindestens eine Zuordnungseinrichtung zur Zuordnung der den Funktionszustand und die Fahrstrecke charakterisierenden Größen unter Bildung von sogenannten Datenpaaren verbunden. Gegebenenfalls kann auch eine Zwischenspeicherung der Datenpaare erfolgen oder bei Vorsehen einer Auswerteinrichtung die Auswertung dieser. Die Datenpaare oder die Auswertergebnisse werden einem Informationsempfänger übermittelt.

## Beschreibung

Die Erfindung betrifft ein Informations- und/oder Servicesystem, im einzelnen mit den Merkmalen aus dem Oberbegriff des Anspruches 1.

Zur Durchführung von Wartungs- und/oder Kontrollarbeiten in Fahrzeugen, welche auch im Rahmen einer Diagnose erfolgen, werden in der Regel bisher die den Antriebs- oder anderen Funktionskomponenten zugeordneten elektronischen Steuervorrichtungen, insbesondere die Steuereinrichtungen verwendet, und aus diesen die entsprechenden Daten zur Diagnose beziehungsweise zur Überwachung der Funktionsweise ausgelesen. Dazu war es erforderlich, daß am Installationsort der Steuerung, insbesondere der Steuereinrichtung diese von einem Servicetechniker manuell mit einer Serviceeinrichtung beziehungsweise einer Diagnoseeinrichtung verbunden wurde. Die Service- beziehungsweise Diagnoseeinrichtung umfaßt dazu Mittel zur Kopplung mit der elektronischen Steuereinrichtung, insbesondere der Steuereinrichtung der Antriebskomponente, eine Auswerteinrichtung, in welcher die über die Kopplung mit der elektronischen Steuereinrichtung eingelesenen beziehungsweise einlesbaren Daten verarbeitet und ausgewertet werden können, und zur schnellen Erkennung Mittel zur Visualisierung der Diagnoseergebnisse. Diese einzelnen Mittel sind dabei im allgemeinen zu einer Baueinheit in Form eines Notebooks oder eines PC's zusammengefaßt. Aufgrund der erforderlichen Delegierung eines Servicetechnikers zum Installationsort der Steuereinrichtung ist die Diagnose durch einen hohen personellen und zeitlichen Aufwand charakterisiert. Dies ist jedoch nicht immer vertretbar. Des weiteren kann die Diagnose nur in bestimmten zeitlichen, vorwählbaren Intervallen durchgeführt werden, wobei auftretende Störungen, die nicht sofort zum Ausfall der Antriebskomponente oder einer anderen zur Betriebsweise des Fahrzeuges erforderlichen Komponente, beispielsweise eines Nebenaggregates beziehungsweise einer derart erheblichen Verschlechterung der Funktionsweise der Antriebskomponente oder der Funktionskomponente führen, nicht erkannt werden. Eine ständige Überwachung der Funktionsweise der Antriebs- oder einer anderen Funktionskomponente, insbesondere einer Getriebebaueinheit, ist mit der derzeitigen Lösung nicht möglich. Zur Gewährleistung einer nahezu sicheren Funktionsweise der Antriebs- oder einer anderen Funktionskomponente, insbesondere der Getriebebaueinheit ist es zudem erforderlich, die Zeitintervalle zwischen den einzelnen Diagnosevorgängen beziehungsweise Wartungs- oder Kontrollarbeiten derart zu wählen, daß irreversible Schädigungen an der Antriebs- oder der Funktionskomponente beziehungsweise den mit diesen gekoppelten Elementen ausgeschlossen werden. Allerdings ermöglichen die mittels der Steuereinrichtungen der Antriebskomponenten bereitgestellten Betriebsdaten nicht immer eine detailierte Auswertung, die gleichzeitig auch auf die besonderen Anforderungen des Haupteinsatzfalles bei einem Betreiber eingeht.

Der Erfindung liegt daher die Aufgabe zugrunde, ein Informations- und/oder Servicesystem für eine Funktions- oder Antriebskomponente in Antriebssträngen von Fahrzeugen, insbesondere für eine Getriebebaueinheit und die damit gekoppelten Antriebskomponenten derart weiterzuentwickeln, welche bei Bedarf zu jedem Zeitpunkt auf einfache Art und Weise Informationen zur Verfügung stellt, mittels welchen beispielsweise eine umfassende Diagnose in Abhängigkeit vom tatsächlichen Hauptanwendungsfall unabhängig vom Standort des Servicepersonals und eine Beurteilung des Fahrverhaltens von seiten des Fahrers ermöglicht wird. Desweiteren soll eine präventive Wartung möglich sein, das heißt unabhängig von der Vornahme der Wartung durch das Servicepersonal soll bereits bei Ermittlung entsprechender Größen, welche auf einen möglichen Schaden an Funktions- und/oder Antriebsbeziehungsweise Funktionskomponenten hinweisen, eine Wartung signalisiert werden können. Zusätzlich soll es für den Betreiber des Fahrzeuges, beispielsweise einen Spediteur, möglich sein, aus den ihm zur Verfügung stehenden Daten Rückschlüsse bei der Beschaffung weiterer Fahrzeuge ziehen zu können beziehungsweise bei der Auslegung der Antriebskomponenten und/oder Schaltprogramme.

Die erfindungsgemäße Lösung ist durch die Merkmale des Anspruchs 1 charakterisiert. Vorteilhafte Ausgestaltungen sind in den Unteransprüchen wiedergegeben.

Das Informations- und/oder Servicesystem für Komponenten, insbesondere beliebige Funktions- und/oder Antriebskomponenten für den Einsatz in Fahrzeugen umfaßt eine erste Teilinformationseinrichtung zur Ermittlung der Betriebsdaten beziehungsweise der die Funktionsweise und/oder den Zustand einer Antriebskomponente wenigstens mittelbar charakterisierenden Größen und/oder der die Funktionsweise und/oder den Zustand des Zusammenwirkens der Antriebskomponente mit anderen Antriebskomponenten wenigstens mittelbar charakterisierenden Größen und eine zweite Teilinformationseinrichtung zur Erfassung wenigstens eines Teiles der die Fahrstrecke bzw. Fahrstrecken des Fahrzeuges wenigstens mittelbar charakterisierenden Größen. Beide Teilinformationseinrichtungen - erste Teilinformationseinrichtung und zweite Teilinformationseinrichtung sind mit einer zentralen Datenbereitstellungseinrichtung, umfassend wenigstens eine Zuordnungseinrichtung gekoppelt. Diese ist beispielsweise in Form eines Bordcomputers ausgeführt. In der zentralen Datenbereitstellungseinrichtung erfolgt die Zuordnung der mittels der ersten Teilinformationseinrichtung erfaßten Betriebsdaten zu den, die Fahrstrecke beziehungsweise dem Betrieb des Fahrzeuges wenigstens mittelbar charakterisierenden Größen. Die somit gebildeten Datenpaare aus den Daten beider Teilinformationseinrichtungen jeweils für einen bestimmmten Zeitpunkt t sind einem Informationsempfänger, beispielsweise einem Betreiber, einem Hersteller und/oder dem Kundendienst beziehungsweise Servicepersonal oder einer anderen berechtigten Person bzw. Institution übermittelbar. Der Begriff Datenpaare ist dabei nicht wortwörtlich zu verstehen, sondern umfaßt ganze Datengruppen, in denen die für einen bestimmten Zeitpunkt t alle über die erste Teilinformationseinrichtung zur Verfügung stehenden Betriebsdaten den zu diesem Zeitpunkt vorliegenden Daten die Fahrstrecke betreffend von der zweiten Teilinformationseinrichtung zugeordnet werden. Vorzugsweise ist die erste Teilinformationseinrichtung als der Antriebskomponente zugeordnete Steuereinrichtung ausgebildet. Die erfindungsgemäße Lösung ermöglicht es, mittels Komponenten mit geringem Speicherplatzbedarf dem Betreiber, Hersteller und/oder Kundendienst und/oder einer anderen berechtigten Person die primär zur Beurteilung des aktuellen Betriebsverhaltens des Fahrzeuges, insbesondere der Auswahl des entsprechenden Schaltprogramms, der Auslegung der Antriebskomponenten in Abhängigkeit des Einsatzzweckes, insbesondere der Angaben zur Fahrstrecke, beispielsweise Länge, Topographie, Art des Betriebes - Überlandverkehr oder Stadverkehr - in optimaler Weise kompakt zur Verfügung zu stellen. Es werden dabei zwei an sich bekannte Systeme miteinander verknüpft, deren ermittelte Daten über einen gewissen Referenzzeitraum miteinander in Bezug gestellt werden, so daß der Betreiber, Hersteller und/oder Kundendienst und/oder eine andere berechtigte Person vollständige Informationen bezüglich des Ist-Zustandes der Betriebsweise erhält.

Unter einem weiteren Aspekt der Erfindung weist die zentrale Datenbereitstellungseinrichtung neben der Zuordnungs- eine Speichereinrichtung auf, daß heißt die einzelnen sich aus der Zuordnung ergebenden Datenpaare bezüglich der Betriebsdaten und der Angaben zur Fahrstrecke können nach Zwischenspeicherung bei Bedarf dem Betreiber und/oder Hersteller und/oder Kundendienst und/oder einer anderen berechtigten Person übermittelt werden. Dieser kann dann entscheiden, inwieweit eine Auswertung dieser Daten vorgenommen wird. In diesem Fall kann die zentrale Datenbereitstellungseinrichtung als Baueinheit mit geringer Speicherkapazität ausgebildet werden, welche wahlweise je nach Bedarf eine Datenübertragung erlaubt.

Unter einem weiteren Aspekt der Erfindung ist die zentrale Datenbereitstellungseinrichtung zusätzlich um einen Auswertmodul erweitert, so daß bereits hinsichtlich entsprechender Vorgaben von seiten des Betreibers, des Herstellers, des Kundendienstes oder einer anderen berechtigten Person auf Anforderung oder fortlaufend die ausgewerteten Ergebnisse zur Verfügung gestellt werden können. Die Auswertung der Daten kann vielgestaltig unter unterschiedlichsten Gesichtspunkten erfolgen, beispielsweise im Hinblick auf den Kraftstoffverbrauch, eine besonders schadstoffarme Fahrweise e.t.c. Dabei besteht die Möglichkeit, einzelnen Auswertstrategien gewisse Prioritäten zuzuordnen, so daß hier eine besondere Kundenorientierung möglich wird. Insbesondere ermöglicht diese Lösung eine kundenfreundliche Bereitstellung von Auswertergebnissen, mit denen der Informationsempfänger, insbesondere Kunde, Betreiber e.t.c bereits allein operieren kann und keinerlei zusätzlicher Auswertsysteme zur Entscheidungsfindung bedarf.

Die Datenübertragung zwischen der zentralen Datenbereitstellungseinrichtung kann
a) fortlaufend oder
b) optional bei Bedarf oder
c) nach bestimmten vordefinierbaren oder frei wählbaren Ereignisintervallen erfolgen.

Unter Ereignisintervallen werden dabei Zeiträume verstanden, welche sich entweder durch das Verstreichen einer bestimmten Zeit, beispielsweise der Betriebsweise der Antriebskomponente oder das Zurückliegen einer bestimmten Strecke beschreiben lassen. Die Übertragung kann dabei drahtlos oder aber mittels entsprechender Datenträger erfolgen. Als Datenträger finden dabei beispielsweise Disketten, CD's oder Videos oder andere, die Zuordnungsdaten visuell oder akustisch wiedergebende Informationsträger Verwendung.

Unter drahtloser Datenübertragung wird dabei jegliche Art der Übertragung von Daten verstanden, welche nicht an das Vorhandensein einer festen Leitungsverbindung zwischen einem Sender und einem Empfänger gebunden ist. Vorzugsweise erfolgt diese in Form einer Funkübertragung. Denkbar ist des weiteren eine Realisierung einer drahtlosen Datenübertragung via Ultraschall oder Infrarot.

Zur Datenübertragung von der Fahrzeugseite her umfassen die Mittel zur Datenübertragung wenigstens eine Sendeeinrichtung. Über diese kann ein Aufbau der Verbindung bei Vorliegen der Zuordnungsdaten sichergestellt werden. Vorzugsweise umfassen die Mittel jedoch auch wenigstens eine Empfangseinrichtung, über welche eine Verbindungsaufbau auch von seiten des Betreibers, Herstellers, Kundendienstes oder einer anderen berechtigten Person realisiert werden kann beziehungsweise vom Standort des entsprechenden Systems, welches eine weitere Auswertung vornimmt.

Bezüglich der Auslösung des Aufbaus einer Verbindung bestehen eine Vielzahl von MÖglichkeiten. Denkbar sind
a) eine ständige Verbindung oder
b) eine frei wählbare, einstellbare Verbindung oder
c) eine bei notwendiger Wartung erzwungene Herstellung der Verbindung.

Dabei werden vorzugsweise die unter b) und c) genannten Möglichkeiten eingesetzt. Im erstgenannten Fall würde eine automatische Datenerfassung über die Steuereinrichtung der Funktions- oder Antriebskomponente in jedem Fall erfolgen und des weiteren eine Zuordnung zu den über die zweite Teilinformationseinrichtung bereitgestellten Daten. Die Datenübertragung selbst erfolgt bidirektional oder quasibidirektional.

Bezüglich der Anordnung der einzelnen Teilinformationseinrichtungen im Fahrzeug bestehen eine Vielzahl von Möglichkeiten, des weiteren bezüglich der Kopplung mit der zentralen Zuordnung und/oder Speichereinrichtung. Diese kann ebenfalls drahtlos oder aber über Verbindungsleitungen erfolgen.

Die erfindungsgemäße Lösung wird nachfolgend anhand einer Figur erläutert.

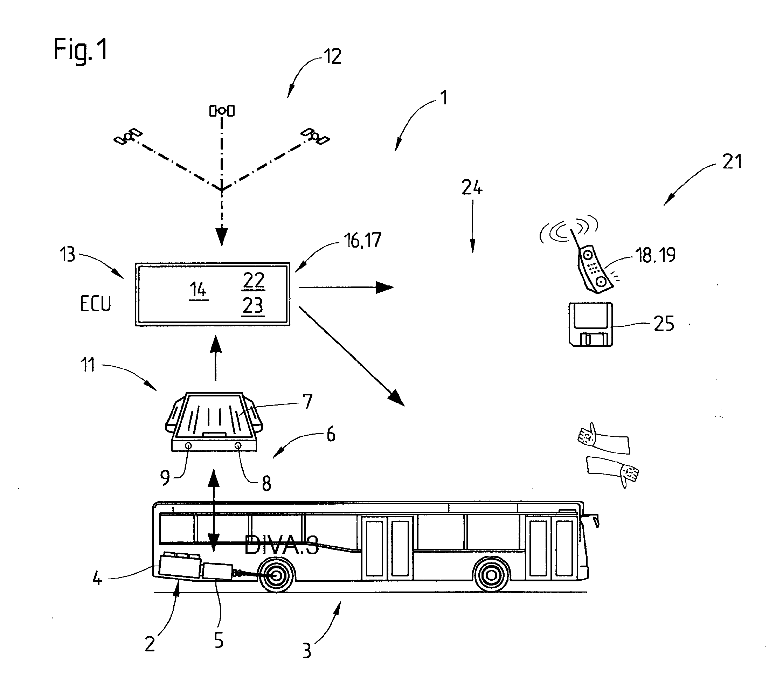

Die Figur 1 verdeutlicht in schematisch stark vereinfachter Darstellung den Grundaufbau und die Grundfunktion eines erfindungsgemäß gestalteten Informations- und/oder Servicesystems 1 für Antriebskomponenten 2 für den Einsatz in Fahrzeugen 3. Im dargestellten Fall sind als Antriebskomponenten 2 eine Antriebsmaschine 4 und eine mit dieser koppelbaren Getriebebaueinheit 5 dargestellt. Der Getriebebaueinheit 5 ist eine Steuervorrichtung 6, umfassend eine Steuereinrichtung in Form eines Steuergerätes 7 zugeordnet. Die Steuervorrichtung 6 kann dabei entweder als autarke, nur der Getriebebaueinheit 5 zugeordnete Steuervorrichtung oder als Bestandteil einer neben- oder übergeordneten Steuervorrichtung, beispielsweise der Fahrsteuerung ausgebildet, oder mit einer neben- oder übergeordneten Fahrsteuerung gekoppelt oder über ein Datenkommunikationsnetzwerk mit anderen Antriebskomponenten beziehungsweise den diesen zugeordneten Steuervorrichtungen verbunden sein. Die Ausführung der Steuervorrichtung 6 und deren Einordnung in das Gesamtsystem des Fahrzeuges 3 hinsichtlich der Priorität gegenüber anderen Steuervorrichtungen hängt dabei konkret vom Einsatzfall ab.

Über die Steuervorrichtung 6 erfolgt dabei zumindest die Ansteuerung der Betätigungseinrichtungen, insbesondere einzelner Stellelemente einzelner Schaltelemente der Getriebebaueinheit 5 zur Realisierung des Wechsels von einer, die Betriebsweise der Getriebebaueinheit 5 charakterisierenden Ausgangsgangstufe in eine Zielgangstufe entsprechend den Erfordernissen des Anwendungsfalles. Die einzelnen Gangstufen bestimmen dabei die Ausnutzung bestimmter Drehzahlbereiche der Antriebsmaschine bezogen auf den Gesamtarbeitsbereich der Antriebsmaschine. Die Ansteuerung erfolgt dabei im allgemeinen mittels vorgegebener Schaltprogramme, welche ein Verfahren zur Steuerung der einzelnen Getriebeelemente, insbesondere Schalteinrichtungen der Getriebebaueinheit 5 hinsichtlich bestimmter Zielkriterien und unter Berücksichtigung der vorliegenden Randbedingungen beschreiben. Der Begriff Schaltprogramm ist dabei derart zu verstehen, daß bei Erfassung der den aktuellen Betriebszustand des Fahrzeuges wenigstens mittelbar charakterisierenden Größen und des Fahrerwunsches in Abhängigkeit dessen die Umschaltpunkte vordefiniert oder berechenbar sind. Jedes Schaltprogramm ist dabei durch sogenannte Schaltkennlinien beschreibbar, welche den Übergang zwischen zwei aufeinanderfolgenden Gangstufen - einer Ausgangsstufe und einer Zielgangstufe - bestimmen. Dabei können die Umschaltpunkte zwischen den einzelnen Gangstufen, das heißt die Schaltdrehzahlen, fest vorgegeben oder frei einstellbar sein. Die Steuereinrichtung 7 weist dazu mindestens einen Eingang 8 auf, über welchen die den Betriebszustand des Fahrzeuges wenigstens mittelbar charakterisierenden Größen der Steuervorrichtung 6 zuführbar sind. Dabei kann bei serieller Datenübertragung bereits ein Eingang 8 ausreichend sein, während bei paralleler Datenübertragung entsprechend der Anzahl der zur Auswertung des Ist-Zustandes der Betriebsweise des Antriebsstranges, insbesondere jedoch der Betriebsweise und des Zustandes der Antriebskomponente eine bestimmte Anzahl entprechender Eingänge 8.1 bis 8.n vorzusehen wäre. Entsprechend den Ist-Werten und einem bestimmten Fahrerwunsch nach Beschleunigung oder Verzögerung beziehungsweise einem bestimmten Fahrverhalten, welcher entweder ebenfalls am Eingang 8 bei serieller Datenübertragung oder als Signal in einem weiteren Eingang 8.n der Steuereinrichtung 7 zuführbar ist, erfolgt die Ansteuerung der einzelnen Elemente der Getriebebaueinheit 5 entsprechend eines bestimmten Schaltprogrammes. Dieses ist vorzugsweise in der Steuereinrichtung 7 hinterlegt. Dabei werden die Eingangsgrößen, insbesondere die in den Gängen 8.1 bis 8.n anliegenden, den aktuellen Ist-Zustand der Betriebsweise des Fahrzeuges wenigstens mittelbar beschreibenden Größen und die den Fahrerwunsch nach einem bestimmten Fahrverhalten wenigstens mittelbar beschreibenden Größen ausgewertet und entsprechend des aktuell gewählten Schaltprogrammes die einzelnen Elemente der Getriebebaueinheit 5 durch Ausgabe der entsprechenden Stellgrößen an einem Ausgang 9 oder mehreren Ausgängen 9.1 bis 9.n angesteuert.

Zur Beurteilung der Funktionsweise einer Antriebskomponente 2, insbesondere einer Getriebebaueinheit 5 im Zusammenwirken mit der Antriebsmaschine 4 ist es erforderlich, die Betriebsdaten, welche die Funktionsweise beziehungsweise die Betriebsweise der Antriebskomponenten oder deren Zusammenwirken wenigstens mittelbar beschreiben, entweder in bestimmten Zeitabständen oder fortlaufend zu erfassen. Die Betriebsdatenerfassung erfolgt dabei über die Steuervorrichtung 6 der Antriebskomponente 2, insbesondere die Steuervorrichtung 6 der Getriebebaueinheit 5. Als Betriebsdaten können dabei im wesentlichen die nachfolgend genannten fortlaufend oder in bestimmten zeitlich vorgegebenen Intervallen direkt oder indirekt, das heißt aus anderen Größen durch mathematische Operationen (Algorithmen, Simulationen, Näherungsverfahren) ermittelt werden:
- Betätigung der einzelnen Schaltelemente in den einzelnen Gangstufen
- Erfassung der Zeiträume der Betätigung der Schaltelemente und der Verweildauer in der jeweiligen Gangstufe
- Erfassung der Schaltpunkte, im einzelnen der Schaltdrehzahlen
- Ermittlung der einzelnen Drehzahlen der Antriebsmaschine und/oder des Abtriebes
- Ermittlung des Kollektivs der Lastgeberstufen der Antriebsmaschine, insbesondere der Verbrennungskraftmaschine und
- gegebenenfalls, falls nicht aus der Fahrzeugkonfiguration eindeutig bekannt, das gewählte oder standardmäßig genutzte Schaltprogramm

Weitere Betriebsdaten, die den Funktionszustand oder die Betriebsweise der Antriebskomponente 2 beschreiben können dabei, den Zustand einzelner Elemente der Antriebskomponente wenigstens mittelbar beschreibende Größen sein, beispielsweise die Temperatur des Schmiermittels und/oder des zur Beaufschlagung der Schaltelemente erforderlichen Druckmittels.

Die Betriebsdaten werden des weiteren aus der Steuereinrichtung 7 der Getriebebaueinheit 5 ausgelesen. Die zur Auswertung erforderlichen Verfahrensschritte erfolgen extern, beispielsweise im Rahmen eines Kundendienstservices außerhalb des Fahrzeuges. Um aussagekräfte Informationen bezüglich des Zustandes und/oder der Funktionsweise der Antriebskomponente 2 beziehungsweise deren Zusammenwirken mit anderen Komponenten, hier beispielsweise der Getriebebaueinheit 5 mit der Antriebsmaschine 4 zu gewährleisten, sind zusätzliche Informationen bezüglich der Fahrstrecken erforderlich. Diese können zum Teil ebenfalls über die Steuervorrichtung 6 der Antriebskomponente 2 ermittelt werden, beispielsweise die Fahrzeiten des Fahrzeuges 3, welche sich in der Betriebsdauer der Antriebsmaschine 4 unter Berücksichtigung der Zeiträume des Leerlaufbetriebes der Getriebebaueinheit 5 erfaßt werden.

Die der Antriebskomponente 2, insbesondere der Getriebebaueinheit 5 zugeordnete Steuervorrichtung 6 bildet dabei eine erste Teilinformationseinrichtung 11. Zur Berücksichtigung der äußeren Gegebenheiten, insbesondere der die Fahrstrecke wenigstens mittelbar charakterisierenden Größen ist eine zweite Teilinformationseinrichtung 12 vorgesehen, mittels welcher wenigstens ein Teil der Daten über die Fahrstrecke, insbesondere das Fahrstreckenprofil, Topographie, das heißt Berg- oder Talfahrt sowie Länge zur Verfügung gestellt werden, wobei zusätzlich Angaben über die Verhältnisse auf den Fahrtstrecken, beispielsweise Stadtverkehr oder Überlandverkehr, häufiger Stauverkehr oder freie Fahrbahn enthalten sein können. Die Daten aus der ersten Informationseinrichtung 11, welche im wesentlichen die Betriebsdaten zur Beschreibung der Funktionsweise und/oder des Betriebszustandes der Antriebskomponente 2, insbesondere der Getriebebaueinheit 5 und deren Zusammenwirken mit der Antriebsmaschine 4 charakterisieren, und die Daten der zweiten Informationseinrichtung 12 werden zum Zweck der eindeutigen Zuordnung zur Erstellung einer detailierten Wiedergabe der Verhältnisse des Fahrverhaltens des Fahrzeuges 3 während eines bestimmten Zeitpunktes einer zentralen Datenbereitstellungseinrichtung 13 in Form eines sogenannten Bordcomputers 14 umfassend mindestens eine Zuordnungseinrichtung 15 zugeführt. Die Zuführung kann über Leitungsverbindungen, in diesem Fall jedoch über mindestens eine zur seriellen Datenübertragung, oder drahtlos zwischen erster und/oder zweiter Teilinformationseinrichtung 11 bzw. 12 und zentraler Datenbereitstellungseinrichtung 13 erfolgen. Es werden in der Zuordnungseinrichtung 15 sogenannte Datenpaare aus den mit der ersten Teilinformationseinrichtung 11 und der zweiten Teilinformationseinrichtung 12 bereitgestellten Daten gebildet, so daß Datengruppen den Fahrzustand zu einem bestimmten Zeitpunkt eindeutig beschreiben. Diese Datenpaare können entweder auf Wunsch über Datenträger oder andere Übertragungsverfahren, beispielsweise drahtlos an den Betreiber des Fahrzeuges zur Auswertung oder dem Hersteller beziehungsweise Kundendienst übermittelt werden. Unter drahtloser Datenübertragung kann dabei jegliche Art der Datenübertragung verstanden werden, welche frei von einer festen Verkabelung zwischen einem Sender und einem Empfänger ist. Eine derartige Übertragung erfolgt vorzugsweise als Funkübertragung. Denkbar ist jedoch auch die Übertragung via Infrarot oder Ultraschall. Dazu sind neben einer Sendereinrichtung, welche im dargestellten Fall mit dem Bordcomputer 14 wenigstens mittelbar gekoppelt sein müßte und hier mit 17 bezeichnet ist, auch eine Empfangseinrichtung 18 bei wahlweiser Übertragung auf Wunsch vorgesehen werden. Auf Seiten des Informationsempfängers 21 wären dann ebenfalls eine Sendeeinrichtung 19 und eine Empfangseinrichtung 20 erforderlich. Beide Einrichtungen können dabei hinsichtlich ihrer Funktion in einer Baueinheit zusammengefaßt werden. Dies kann beispielsweise in Form einer Telekommunikationseinrichtung erfolgen, wobei diese vorzugsweise als GSM-Endgerät oder Telefon ausgeführt ist. Unter Telekommunikation wird dabei die Kommunikation zwischen Menschen, Maschinen und anderen Systemen mit Hilfe von nachrichtentechnischen Übertragungsverfahren verstanden. Kommunikationsformen sind neben Sprache, Texte, Bild- und Datenkommunikation.

Bei Übermittlung der die Betriebsweise des Fahrzeuges charakterisierenden Größen in Abhängigkeit von der entsprechenden Fahrstrecke über Datenträger 25, beispielsweise in Form von Disketten oder CD-ROMs oder Videos wird insbesondere für die wahlweise Datenübertragung gewählt. Die drahtlose Datenübertragung erfolgt entweder fortlaufend oder entsprechend des Bedarfes. Dieser kann immer auf unterschiedliche Art und Weise charakterisiert werden. Denkbar ist dabei die Auslösung des Verbindungsaufbaus beispielsweise von Seiten des Betreibers, des Herstellers oder des Kundendienstes, abhängig von wenigstens einer, den Zustand einer erforderlichen Wartung oder Diagnose der Komponente, insbesondere Funktions- oder Antriebskomponente wenigstens mittelbar beschreibenden Größe oder bei Erfassung eines besonders hohen Kraftstoffverbrauches, welcher über die zentrale Datenbereitstellungseinrichtung 13 aus den Betriebsdaten in Abhängigkeit von der Fahrstrecke ermittelt wird. Eine andere Möglichkeit besteht auch hier in der wahlweisen Datenübertragung unabhängig von einer erforderlichen Wartung oder eines Informationsbedarfes über eine erforderliche Änderung der Auslegung der Getriebebaueinheit, der Auswahl des Schaltprogrammes oder des Fahrverhaltens zu beliebigen Zeitpunkten.

Im erstgenannten Fall erfolgt die Auslösung bei Vorliegen wenigstens einer der nachfolgend genannten Zustände:
a) die Funktions- oder Antriebskomponente benötigt eine Wartung, beispielsweise nach Ablauf eines bestimmten Zeitintervalls
b) bei Übermittlung von Betriebsdaten von der Steuervorrichtung 6 zur zentralen Datenbereitstellungseinrichtung 13
c) Erkennen von kritischen Betriebszuständen der Funktions- oder Antriebskomponente im Vorfeld durch Änderung bestimmter, die Betriebs- und/oder Funktionsweise der Funktions- oder Antriebskomponente oder einzelner Elemente der Funktions- oder Antriebskomponente beschreibender Größen

Im zweiten Fall ist eine Auslösung der Verbindung beispielsweise in folgenden Fällen denkbar:
d) Aktualisierung der Steuersoftware der Steuervorrichtung 6, insbesondere der Steuereinrichtung 7 zur Änderung der Betriebsweise der Funktions- oder Antriebskomponente 2 durch den Hersteller oder andere berechtigte Personen oder
e) zeitweise Abfrage der die Funktionsweise der Funktions- oder Antriebskomponente charakterisierenden Daten durch den Hersteller oder Betreiber

Im einfachsten Fall fungiert das Informationssystem lediglich als reines Informationssystem, das heißt, es werden die erforderlichen Daten zur externen Auswertung, beispielsweise beim Betreiber, beim Hersteller oder beim Kundendienst an diese übermittelt. In diesem Fall fungiert die erste Teilinformationseinrichtung 11 in Form der elektronischen Steuervorrichtung 6 als Einrichtung zur Erfassung und Speicherung der Betriebsdaten beziehungsweise zur Erfassung und sofortiger Weiterleitung der Betriebsdaten an die zentrale Speicher- und/oder Auswerteinrichtung 13, welche wiederum lediglich als Schnittstelle zwischen der ersten Teilinformationseinrichtung 11 und der zweiten Teilinformationseinrichtung 12 zum Zusammenführen der einzelnen zueinander gehörenden Daten, die Betriebsdaten in Abhängigkeit der Gegebenheiten der Fahrstrecke betreffen. In diesem Fall werden lediglich die zur Beurteilung der Funktionsweise beziehungsweise Betriebsweise des Fahrzeuges charakterisierenden Größen in ihrem Zusammenhang beziehungsweise in ihrer Zusammengehörigkeit an den Betreiber, den Kundendienst oder den Hersteller weitergeleitet. Eine Auswertung erfolgt nicht. Im zweiten Fall wird bereits in der zentralen Datenbereitstellungseinrichtung 13 eine entsprechende Bewertung der, die Funktions- oder Betriebsweise der Antriebskomponente betreffenden Daten in Abhängigkeit von den Randbedingungen, welche aus der Fahrstrecke resultieren. In diesem Fall wird bereits das Ergebnis der Auswertung an den Betreiber, den Hersteller oder den Kundendienst oder eine andere berechtigte Person übertragen.

Bezüglich der Ausführung der ersten Teilinformationseinrichtung 11 sowie der zweiten Teilinformationseinrichtung 12 bestehen eine Vielzahl von Möglichkeiten. Diese werden entsprechend den Erfordernissen des Einsatzfalles festgelegt, so daß keine verbindliche Ausführung vorgegeben werden muß. Als Mindestanforderung für die Steuervorrichtung 6 der Getriebebaueinheit 5 besteht lediglich die Erfassung der Betriebsdaten, wobei auch hier entsprechend der Ausgestaltung der Steuervorrichtung mit Zwischenspeicher entweder optional die Zwischenspeicherung der Betriebsdaten über ein bestimmtes Zeitintervall oder aber eine fortlaufende Übertragung der Betriebsdaten an eine zentrale Datenbereitstellungseinrichtung 13 gegeben sein muß. Die zentrale Datenbereitstellungseinrichtung 13 umfaßt dabei als Mindestanforderung lediglich die Erfassung beziehungsweise das Auslesen der Betriebsdaten aus der der Antriebskomponente zugeordneten Steuervorrichtung 6 sowie die Erfassung der die Fahrstrecke wenigstens mittelbar charakterisierenden Größen und die Zuordnung der Betriebsdaten zu den die Fahrstrecke charakterisierenden Größen. Bei Vorhandensein eines Speichers kann eine Zwischenspeicherung über eine bestimmte Zeitdauer erfolgen oder die zentrale Datenbereitstellungseinrichtung 13 fungiert nach der Zuordnung lediglich als Übertragungsmittel der entsprechenden Datenpaare.

Die erfindungsgemäße Lösung ist nicht auf die in der Figur dargestellte Ausführung beschränkt. Weitere Modifizierungen sind ebenfalls denkbar.

### Bezugszeichenliste

- 1: Informations- und/oder Servicesystem
- 2: Antriebskomponente
- 3: Fahrzeug
- 4: Antriebsmaschine
- 5: Getriebebaueinheit
- 6: Steuervorrichtung der Getriebebaueinheit
- 7: Steuereinrichtung
- 8: Eingang
- 9: Ausgang
- 10: Auswerteinrichtung
- 11: erste Teilinformationseinrichtung
- 12: zweite Teilinformationseinrichtung
- 13: zentrale Datenbereitstellungseinrichtng
- 14: Bordcomputer
- 15: Zuordnungseinrichtung
- 16: Mittel zur Datenübertragung
- 17: fahrzeugseitige Sendeeinrichtung
- 18: fahrzeugseitige Empfangseinrichtung
- 19: Sendeeinrichtung beim Informationsempfänger
- 20: Empfangseinrichtung beim Informationsempfänger
- 21: Informationsempfänger
- 22: Speichereinrichtung
- 23: Auswerteinrichtung
- 24: Mittel zur drahtlosen Datenübertragung
- 25: Datenträger

## Patentansprüche

1. Informations- und/oder Servicesystem (1) für Komponenten (2), insbesondere Antriebs- und/oder Funktionskomponenten für den Einsatz in Fahrzeugen (3),
1.1 mit einer ersten, der Antriebs- und/oder Funktionskomponente zugeordneten Teilinformationseinrichtung (11) zur Erfassung von die Funktionsweise und/oder den Betriebszustand der Antriebs- und/oder Funktionskomponente (2, 5) wenigstens mittelbar charakterisierenden Größen und/oder von das Zusammenwirken der Antriebs- und/oder Funktionskomponente (2, 5) mit anderen Antriebskomponenten (4) wenigstens mittelbar charakterisierenden Größen;
1.2 mit einer zweiten Teilinformationseinrichtung (12) zur wenigstens teilweisen Erfassung der die Fahrstrecke des Fahrzeuges (3) wenigstens mittelbar charakterisierenden Größen;
1.3 die erste Teilinformationseinrichtung (11) und die zweite Teilinformationseinrichtung (12) sind mit einer zentralen Datenbereitstellungseinrichtung (13), umfassend eine Zuordnungseinrichtung (15) zur Zuordnung der die Betriebsweise und/oder den Funktionszustand der Antriebs- und/oder Funktionskomponente (2) und der die Fahrstrecke charakterisierenden Größen verbunden;
1.4 mit Mitteln (16) zur Übertragung der Zuordnungsdaten an einen Informationsempfänger (21).

2. Informations- und/oder Servicesystem (1) nach Anspruch 1, **dadurch gekennzeichnet, daß** die erste Teilinformationseinrichtung (11) eine der Antriebs- und/oder Funktionskomponente (2) zugeordnete Steuereinrichtung (7) ist.

3. Informations- und/oder Servicesystem (1) nach Anspruch 2, **dadurch gekennzeichnet, daß** die Antriebs- und/oder Funktionskomponente (2) von einer Getriebebaueinheit (5) gebildet wird und die erste Teilinformationseinrichtung (11) die der Getriebebaueinheit (5) zugeordnete Steuereinrichtung (7) ist.

4. Informations- und/oder Servicesystem (1) nach einem der Ansprüche 1 bis 3, **dadurch gekennzeichnet, daß** die zentrale Datenbereitstellungseinrichtung (13) mindestens eine Speichereinheit (22) zur wenigstens zeitweisen Zwischenspeicherung der einander mittels der Zuordnungseinrichtung (15) zugeordneten Daten beider Teilinformationsseinrichtungen (11, 12) aufweist.

5. Informations- und/oder Servicesystem (1) nach einem der Ansprüche 1 bis 4, **dadurch gekennzeichnet, daß** die zentrale Datenbereitstellungseinrichtung (13) eine Auswerteinrichtung (23) zur Auswertung der der mittels der Zuordnungseinrichtung (15) zugeordneten Daten beider Teilinformationsseinrichtungen (11, 12) aufweist.

6. Informations- und/oder Servicesystem (1) nach einem der Ansprüche 1 bis 5, **dadurch gekennzeichnet, daß** die Mittel (16) zur Datenübertragung Mittel (24) zur drahtlosen Datenübertragung umfassen.

7. Informations- und/oder Servicesystem (1) nach Anspruch 6, **dadurch gekennzeichnet, daß** die Mittel (24) zur drahtlosen Datenübertragung wenigstens eine fahrzeugseitig angeordnete Sendeeinrichtung (17) umfassen.

8. Informations- und/oder Servicesystem (1) nach Anspruch 7, **dadurch gekennzeichnet, daß** die Mittel (24) zur drahtlosen Datenübertragung eine beim Informationsempfänger (21) angeordnete Empfangseinrichtung (20) umfassen.

9. Informations- und/oder Servicesystem (1) nach Anspruch 7 oder 8, **dadurch gekennzeichnet, daß** die Mittel (24) zur drahtlosen Datenübertragung eine der zentralen Datenbereitstellungseinrichtung (13) zugeordnete Empfangseinrichtung (18) umfassen.

10. Informations- und/oder Servicesystem (1) nach einem der Ansprüche 7 bis 9, **dadurch gekennzeichnet, daß** die fahrzeugseitigen und/oder informationsempfängerseitigen Sende- und/oder Empfangseinrichtungen (17, 18, 19, 20) von einer Funktelekommunikationseinrichtung gebildet werden.

11. Informations- und/oder Servicesystem (1) nach einem der Ansprüche 7 bis 9, **dadurch gekennzeichnet, daß** die fahrzeugseitigen und/oder informationsempfängerseitigen Sende- und/oder Empfangseinrichtungen zur Verarbeitung und/oder Übertragung von Ultraschallsignalen ausgebildet sind.

12. Informations- und/oder Servicesystem (1) nach einem der Ansprüche 7 bis 9, **dadurch gekennzeichnet, daß** die fahrzeugseitigen und/oder informationsempfängerseitigen Sende- und/oder Empfangseinrichtungen zur Verarbeitung und/oder Übertragung von Infrarotsignalen ausgebildet sind.

13. Informations- und/oder Servicesystem (1) nach einem der Ansprüche 1 bis 5, **dadurch gekennzeichnet, daß** die Mittel (16) zur Datenübertragung Datenträger (25) umfassen.

14. Informations- und/oder Servicesystem (1) nach Anspruch 13, **dadurch gekennzeichnet, daß** der Datenträger als Diskette oder CD-ROM oder Video ausgeführt ist.

15. Informations- und Servicesystem (1) nach einem der Ansprüche 1 bis 14, **dadurch gekennzeichnet, daß** die Übertragung der Daten von der ersten Teilinformationseinrichtung (11) und/oder der zweiten Teilinformationseinrichtung (12) zur zentralen Datenbereitstellungseinrichtung (13) mittels Mitteln zur drahtlosen Datenübertragung erfolgt.

16. Informations- und Servicesystem (1) nach einem der Ansprüche 1 bis 15, **dadurch gekennzeichnet, daß** die die Fahrstrecke des Fahrzeuges (3) wenigstens mittelbar charakterisierenden Größen wenigstens eine der nachfolgend genannten Größen umfassen:
- Länge der Fahrtstreckenlänge zwischen einzelnen Stops
- Größen zur Beschreibung der Topographie der gefahrenen Strecke.

17. Informations- und Servicesystem (1) nach einem der Ansprüche 1 bis 16, **dadurch gekennzeichnet, daß** die Zuordnungsdaten ein Protokoll über die die Fahrtstrecke charakterisierenden Größen umfassen.
